# EUROPÄISCHE PATENTSCHRIFT

(11) **EP 4 077 984 B1**
(45) Veröffentlichungstag und Bekanntmachung des Hinweises auf die Patenterteilung: **22.05.2024**
(21) Anmeldenummer: 20817293.2
(22) Anmeldetag: 01.12.2020
(51) Int. Cl.: F16J 15/06, F16B 3/04, F16B 21/18, F16L 37/092, H01M 50/147

(54) **BAUGRUPPE, GEHÄUSEDECKEL MIT EINER SOLCHEN BAUGRUPPE UND FELDGERÄT MIT EINEM SOLCHEN GEHÄUSEDECKEL**
ASSEMBLY, HOUSING COVER HAVING AN ASSEMBLY OF THIS TYPE, AND FIELD DEVICE HAVING A HOUSING COVER OF THIS TYPE
ENSEMBLE, COUVERCLE DE BOÎTIER DOTÉ D'UN TEL ENSEMBLE ET DISPOSITIF DE TERRAIN POURVU D'UN TEL COUVERCLE DE BOÎTIER

(30) Priorität: 20.12.2019 DE 102019135583
(43) Veröffentlichungstag der Anmeldung: 26.10.2022
(73) Patentinhaber: Endress + Hauser Flowtec AG, 4153 Reinach (CH)
(72) Erfinder: LARSSON, Björn, 4127 Birsfelden (CH); RIMKUS, Philipp, 79540 Lörrach (DE); LOEFFEL, Philipp, 4104 Oberwil (CH)
(74) Vertreter: Hahn, Christian
(86) Internationale Anmeldenummer: PCT/EP2020/084099
(87) Internationale Veröffentlichungsnummer: WO 2021/121966

(56) Entgegenhaltungen:
- WO-A1-2010/006838
- DE-A1- 10 032 926
- FR-A- 1 125 551

## Beschreibung

Die vorliegende Erfindung betrifft eine Baugruppe, einen Gehäusedeckel mit einer solchen Baugruppe, und ein Feldgerät mit einem solchen Gehäusedeckel.

Gattungsgemäße Baugruppen, insbesondere Gehäusedeckel umfassen eine Kreisscheibe und einen Ringkörper, der eine Aufnahme für die Kreisscheibe aufweist. Die Aufnahme für die Kreisscheibe kann beispielsweise einen Anschlag aufweisen, gegen den die Kreisscheibe axial eingespannt ist, oder die Kreisscheibe kann in der Aufnahme mittels eines metallischen Sicherungsrings gehalten sein, wobei zusätzlich ein Dichtring vorgesehen ist, welcher an der Kreisscheibe anliegt, um einen Gasaustausch an der Kreisscheibe vorbei zwischen zwei mittels der Kreisscheibe voneinander getrennten Volumina zu verhindern.

Ein gattungsgemäßes Bauteil wird unter anderem als Gehäusedeckel eines Feldgerätegehäuses verwendet, um dieses zu verschließen, wobei es oft erforderlich ist, dass das Feldgerät, der Zundschutzart Ex-d bzw. "druckfeste Kapselung" genügt. Dementsprechend ist weisen die eingangs beschriebenen Baugruppen vergleichsweise aufwändige Konstruktionen hohe Festigkeiten, und strenge Fertigungstoleranzen auf, um die erforderliche Schutzklasse zu erreichen.

Es ist die Aufgabe der vorliegenden Erfindung, eine vereinfachte Baugruppe bereitzustellen, ohne die Leistungsfähigkeit der Baugruppe zu beeinträchtigen. Die Aufgabe wird erfindungsgemäß gelöst durch die Baugruppe gemäß Anspruch 1, den Gehäusedeckel gemäß Anspruch 14 und das Feldgerät gemäß Anspruch 15.

Die erfindungsgemäße Baugruppe umfasst: eine Kreisscheibe; einen Ringkörper; und einen Elastomerring; wobei der Ringkörper eine Scheibenaufnahme aufweist, die durch eine umlaufende Mantelfläche umschlossen ist, wobei die Mantelfläche eine ringförmig umlaufende Außennut aufweist, welche in einer ersten axialen Richtung durch eine erste Außenschulter begrenzt ist, und welche in einer entgegengesetzten, zweiten axialen Richtung durch eine zweite axiale Schulter begrenzt ist; wobei an die erste Außenschulter in der ersten axialen Richtung eine Führungsfläche anschließt, deren Radius mit Abstand zur ersten Schulter monoton steigt, wobei gilt dr/dz <2/3 und insbesondere dr/dz < 1/3; wobei die Kreisscheibe eine äußeren Mantelfläche mit einer umlaufenden Innennut aufweist, die sich radial einwärts erstreckt, die in der ersten axialen Richtung durch eine erste Innenschulter begrenzt ist, und die in der zweiten axialen Richtung durch eine zweite Innenschulter begrenzt ist; wobei zumindest die beiden Innenschultern in einem axialen Längsschnitt, in dem die Rotationsachse der Kreisscheibe verläuft, eine konvexe Kontur aufweisen, wobei der Elastomerring zwischen beiden Innenschultern und beiden Außenschultern eingespannt ist, wodurch insbesondere eine Verschiebung der Kreisscheibe aus dem Ringkörper bis zu einer Grenzbelastung verhindert wird.

Die Grenzbelastung kann in einer Weiterbildung der Erfindung das beispielsweise eine Belastung umfassen, bei welcher der Elastomerring reißt, oder einen Schlag mit einer Energie von mehr als 7 Joule, oder einen Überdruck von mehr als 0,2 bar, beispielsweise mehr als 0,5 bar, insbesondere mehr als 1 bar.

Insbesondere wird die Kreisscheibe ausschließlich durch den Elastomerring in der Scheibenaufnahme gehalten.

Der Elastomerring wirkt erfindungsgemäß zudem als Dichtung, wobei insbesondere die zweite Innenschulter und die zweite Außenschulter als Dichtflächen dienen.

Die elastische Lagerung in einem Elastomerring ermöglicht zudem die Aufnahme von Schlagenergie, wodurch die Scheibe bei Schlägen erheblich entlastet wird.

Eine Kontur ist dann konvex, wenn eine gerade Verbindungslinie zwischen zwei Punkten an der Oberfläche der Kontur durch die Kontur oder an der Oberfläche der Kontur verläuft.

In einer Weiterbildung der Erfindung weist die Innennut einen durch den Elastomerring begrenzten, leeren Ausweichraum auf, dessen Querschnittsfläche im Längsschnitt nicht weniger als ein Viertel einer Querschnittsfläche, beispielsweise nicht weniger ein Drittel einer Querschnittsfläche des Elastomerrings im entspannten, nicht eingespannten Zustand beträgt.

In einer Weiterbildung der Erfindung ist die lichte Höhe h des Ausweichraums geringer als die Schnurstärke des Elastomerrings.

In einer Weiterbildung der Erfindung steigt die lichte Höhe h des Ausweichraums mit dem Radius monoton, wobei für die Steigung dh/dr der lichten Höhe h als Funktion des Radius r zwischen der ersten Innenschulter und der zweiten Innenschulter, auf mindestens den radial äußeren 50% der Flächen der Innenschultern, zwischen denen der Elastomerring axial eingespannt ist, gilt: dh/dr > 1/2, insbesondere dh/dr > 2/3.

In einer Weiterbildung der Erfindung weist die Führungsfläche einen kegelstumpfförmigen Verlauf auf.

In einer Weiterbildung der Erfindung weist die Kreisscheibe einen transparenten Werkstoff auf, insbesondere Glas oder ein Transparentes Polymer, beispielsweise PMMA, PEEK oder Polycarbonat.

In einer Weiterbildung der Erfindung weist der Ringkörper einen metallischen Werkstoff auf, beispielsweise Aluminium, oder ein Polymer, beispielsweise PEEK oder Polycarbonat.

In einer Weiterbildung der Erfindung weist der Elastomerring ein Elastomer auf, beispielsweise VMQ, HNBR, FKM, EPDM.

In einer Weiterbildung der Erfindung beträgt der maximale radiale Abstand zwischen der Mantelfläche der Kreisscheibe und der Mantelfläche der Scheibenaufnahme, insbesondere auf einer axialen Länge von nicht weniger als 10 mm, nicht mehr als 0,15 mm.

In einer Weiterbildung der Erfindung verbindet in einem axialen Längsschnitt durch das Zentrum der Kreisscheibe eine erste Verbindungslinie einen ersten Mittelpunkt einer ersten Auflagefläche des Elastomerrings an der ersten Innenschulter und einen zweiten Mittelpunkt einer zweiten Auflagefläche des Elastomerrings der zweiten Außenschulter miteinander, wobei eine zweite Verbindungslinie einen dritten Mittelpunkt einer dritten Auflagefläche des Elastomerrings an der zweiten Innenschulter und einen vierten Mittelpunkt einer vierten Auflagefläche des Elastomerrings der ersten Außenschulter miteinander verbindet, wobei die erste Verbindungslinie gegenüber der Rotationsachse der Kreisscheibe um nicht mehr als 45°, insbesondere um nicht mehr als 40° geneigt ist, wobei die zweite Verbindungslinie gegenüber der Rotationsachse der Kreisscheibe um nicht mehr als 45°, insbesondere um nicht mehr als 40° geneigt ist, wobei die erste Verbindungslinie gegenüber der Rotationsachse der Kreisscheibe um nicht weniger als 15°, insbesondere um nicht weniger als 23° geneigt ist, wobei die zweite Verbindungslinie gegenüber der Rotationsachse der Kreisscheibe um nicht weniger als 15°, insbesondere um nicht weniger als 23° geneigt ist.

In einer Weiterbildung der Erfindung beträgt ein minimaler Abstand zwischen der ersten Innenschulter und der zweiten Außenschulter nicht mehr als 90% der Schnurstärke des Elastomerrings, wobei ein minimaler Abstand zwischen der zweiten Innenschulter und der ersten Außenschulter nicht mehr als 90% der Schnurstärke des Elastomerrings beträgt.

In einer Weiterbildung der Erfindung ist ein minimaler Radius der ersten Außenschulter um nicht mehr als 0,5 mm, insbesondere nicht mehr als 0,2 mm größer ist als ein maximaler Radius der zweiten Innenschulter.

Der erfindungsgemäße Gehäusedeckel für ein Feldgerät, umfasst eine erfindungsgemäße Baugruppe nach einem der vorhergehenden Ansprüche, wobei der Ringkörper weiterhin einen zylindrischen Wandabschnitt aufweist.

Der zylindrischen Wandabschnitt kann ein Gewinde, insbesondere ein Innengewinde aufweisen, um den Gehäusedeckel an einem Gehäusekörper befestigen zu können. Andere Befestigungsarten sind ebenfalls möglich, beispielsweise Schrauben oder ein Bajonettverschluss.

Das erfindungsgemäße Feldgerät umfasst ein Gehäuse und eine Betriebsschaltung, welche in dem Gehäuse angeordnet ist, wobei das Gehäuse einen Gehäusekörper und mindestens einen erfindungsgemäßen Gehäusedeckel aufweist, wobei das Gewinde des Gehäusedeckels mit einem komplementären Gewinde des Gehäusekörpers verschraubt ist, um die Betriebsschaltung zu umschließen.

In einer Weiterbildung der Erfindung genügt das Feldgerät der Zündschutzart "druckfeste Kapselung", Ex-d.

Ein Feldgerät im Sinne der Erfindung umfasst beispielsweise einen Messumformer, wie er beispielsweise in der industriellen Prozessmesstechnik zum Einsatz kommt, um Prozessparameter wie Temperatur, Druck, Füllstand, Durchflussrate, Dichte, Viskosität, pH-Wert, Redox-Potential, elektrische Leitfähigkeit, Feuchte, Konzentration gelöster Gase, Schlammspiegel, Trübung, Summenparameter, wie TOC, oder die Zusammensetzung mehrkomponentiger Medien zu erfassen. Weiterhin kann ein Feldgerät im Sinne der Erfindung einen Aktuator umfassen, beispielsweise eine Pumpe, ein Ventil, ein Rührwerk oder eine Temperiervorrichtung, beispielsweise ein Kühlaggregat oder einen Heizer. Feldgeräte umfassen gewöhnlich eine Betriebsschaltung zum Betreiben des Feldgerätes, insbesondere zum Bereitstellen von Messsignalen an ein Leitsystem oder zum Empfangen von Stellsignalen vom Leitsystem und zum Steuern der Aktuatoren gemäß der Stellsignale.

Ähnliche Baugruppen sind aus DE10032926, DE102009030494 und FR1125551 bekannt.

Die Erfindung wird nun anhand der in den Zeichnungen dargestellten Ausführungsbeispiele näher erläutert. Es zeigt:
Fig. 1: einen schematischen Längsschnitt durch ein Ausführungsbeispiel eines erfindungsgemäßen Feldgerätes; und
Fig. 2: einen Detaillängsschnitt von Komponenten eines Ausführungsbeispiels einer erfindungsgemäßen Baugruppe.

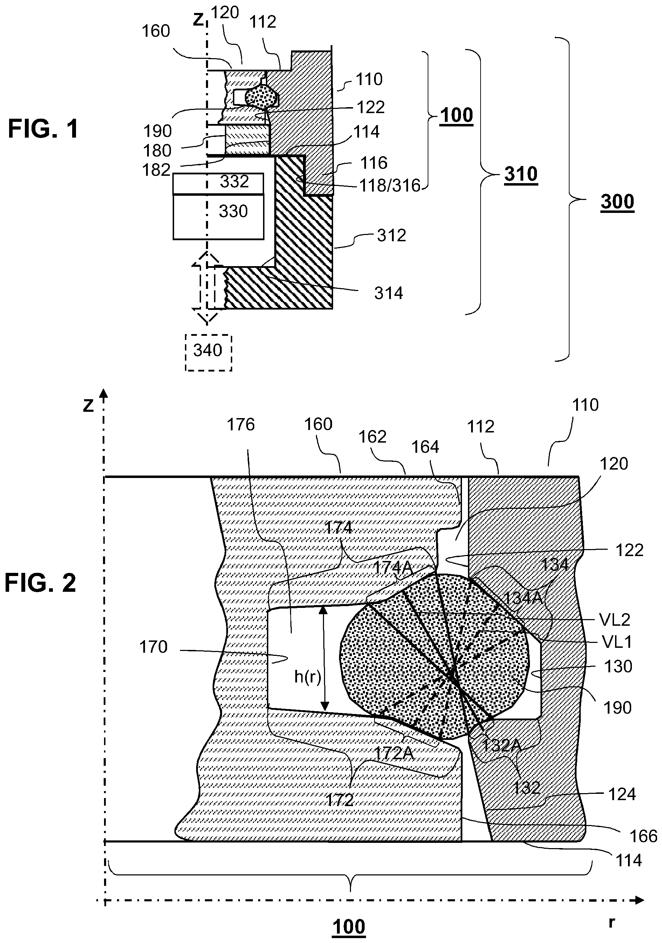

Das in Fig 1 dargestellte Ausführungsbeispiel eines erfindungsgemäßen Feldgeräts 300 umfasst ein Feldgerätegehäuse 310 mit einem zumindest abschnittsweise zylindrischen Gehäusekörper 312 und eine erfindungsgemäße Baugruppe 100, welche einen Gehäusedeckel bildet. In dem Gehäuse 300 ist eine Kammer 314 ausgebildet, in welcher eine Betriebsschaltung 330 zum Betreiben des Feldgeräts 300 angeordnet ist. Das Feldgerät 300 umfasst weiterhin ein Sensormodul 340, welches mit dem Gehäuse 310 mechanisch verbunden ist und letzteres insbesondere trägt. Das Sensormodul 340 kann beispielsweise einen Durchflussmessaufnehmer umfassen, zum Erfassen einer Volumendurchflussrate oder einer Massendurchflussrate. Das Sensormodul 340 stellt messgrößenabhängige Primärsignale bereit, die von der Betriebsschaltung 330 zur Weitergabe an ein Leitsystem bzw. zur Anzeige in einem Display 332 aufbereitet werden. Einzelheiten dazu sind bekannt und brauchen hier nicht erläutert zu werden.

Die als Gehäusedeckel dienende Baugruppe 100 umfasst einen Ringkörper 110 mit einer Scheibenaufnahme 120, in welche ein Scheibenkörper 160 eingesetzt und mit einem Elastomerring 190 gehalten ist. Die Scheibenaufnahme 120 erstreckt sich als kreisförmige Öffnung zwischen einer ersten Stirnfläche und einer zweiten Stirnfläche des Ringkörpers 110, wobei eine die Scheibenaufnahme begrenzende Mantelfläche 122 eine Kontur aufweist mit welcher der Elastomerring 190 gehalten wird, und die weiter unten im Zusammenhang mit Fig. 2 näher erläutert wird. Der Ringkörper 110 weist weiterhin einen hülsenartigen Fortsatz 116 auf, an dessen innerer Mantelfläche ein Gewinde 118 ausgebildet ist, welches in ein komplementäres Außengewinde 316 des Gehäusekörpers 312 eingreift, um die Kammer 314 zu verschließen. Die Kreisscheibe 160 weist optional auf ihrer der Kammer 314 zugewandten Seite einen koaxialen, ringförmigen Fortsatz 180 auf mit einer Höhe von 10 mm an seiner äußeren Mantelfläche, wobei zwischen letzterer und einer gegenüberliegenden Mantelfläche des Ringkörpers 110 ein Ringspalt 182 verbleibt, welcher die Anforderungen an eine Flammendurchschlagsperre erfüllt, insbesondere also eine Spaltbreite von nicht mehr als 0,15 mm aufweist. Bei entsprechender Dimensionierung der Materialstärke des Gehäusekörpers 312, des Ringkörpers 110, der Kreisscheibe 160 und des Elastomerrings 190 erfüllt das Feldgerät 300 damit die Erfordernisse der Zünschutzart "druckfeste Kapselung" bzw. "Ex-d".

Einzelheiten der erfindungsgemäßen Baugruppe 100 welche hier einen Gehäusedeckel bildet, werden im Folgenden anhand von Fig. 2 erläutert. Fig. 2 zeigt einen Längsschnitt in dessen Ebene die Z-Achse also die Symmetrieachse der Rotationssymmetrie der Baugruppe verläuft. Die Baugruppe 100 umfasst einen im Wesentlichen rotationssymmetrischen Ringkörper 110, mit einer ersten Stirnfläche 112, und einer dieser abgewandten zweiten Stirnfläche 114. Zwischen der ersten Stirnfläche 112und der zweiten Stirnfläche 114 erstreckt sich eine durchgehende kreisrunde Öffnung, welche eine Scheibenaufnahme 120 bildet. Die Scheibenaufnahme ist durch eine Aufnahmemantelfläche 122 begrenzt. In welche sich eine Außenringnut 130 radial auswärts erstreckt. Die Außenringnut 130 ist in einer ersten axialen Richtung durch eine erste Außenschulter 132 und in einer zweiten axialen Richtung durch eine zweite Außenschulter 134 begrenzt. In der ersten axialen Richtung schließt an die erste Außenschulter 132 eine erste Führungsfläche 124 an, welche hier Kegelstumpfartig ausgebildet ist und gegenüber der Z-Achse etwa 30° geneigt ist. Die erste Außenschulter 132 weist, abgesehen von einer abgerundeten, konvexen Fase in einem inneren Endabschnitt im Wesentlichen einen nahezu ebenen Verlauf auf. Die zweite Außenschulter 134 ist dagegen etwa 40° bis 50° aus einer Ebene Z = const geneigt.

In die Scheibenaufnahme 120 ist eine Kreisscheibe 160 eingebracht, die eine erste Stirnfläche 162 aufweist, die im Wesentlichen mit der ersten Stirnfläche 112 des Ringkörpers 110 axial fluchtet. Zudem weist die Stirnfläche 112 gegenüber dem Volumen der Kreisscheibe 160 einen radialen Vorsprung 164 auf, um einen Ringspalt zwischen der Kreisscheibe 160 und der Scheibenaufnahme auf nicht mehr als 0,15 mm zu begrenzen. Von einer Mantelfläche 166 der Kreisscheibe 160 erstreckt sich eine Innenringnut 170 radial einwärts in die Kreisscheibe 160. Wobei die Innenringnut 170 mit der Außenringnut 130 in axialer Richtung im Wesentlichen überlappt. Die Innenringnut 170 ist in der ersten axialen Richtung durch eine erste Innenschulter 172 und in der zweiten axialen Richtung durch eine zweite Innenschulter 174 begrenzt. Die beiden Innenschultern 172, 174 haben im Schnittbild der Fig. 2 einen konvexen Verlauf, wobei der axiale Abstand zwischen den beiden Innenschultern 172, 174, welcher eine lichte Höhe h der Nut 170, bzw. eines durch einen Elastomerring 190 begrenzten Ausweichraums 176 in der Nut definiert, mit zunehmendem Radius zunimmt. Zwischen den beiden Außenschultern 132, 134 und den beiden Innenschultern 172, 174 ist der Elastomerring 190 eingespannt, welcher die Kreisscheibe 160 in der Scheibenaufnahme 120 festhält. Der radiale Vorsprung 164 dient zudem als Sicherung gegen Herausdrücken der Kreisscheibe 160 aus der Scheibenaufnahme, denn wenn der radiale Vorsprung 164 durch Verschieben der Kreisscheibe 160 an dem Elastomerring 190 anliegt, ist die Bewegung bis zur Zerstörung des Elastomerrings 190 gestoppt.

Das Festhalten der Kreisscheibe wird durch die folgenden geometrischen Aspekte der Baugruppe begünstigt:
Wenn in dem Längsschnitt gemäß Fig. 2, ein radial äußersten Auflagepunkt des Elastomerrings 190 an der ersten Innenschulter 172 mit einem radial innersten Auflagepunkt des Elastomerrings 190 an der zweiten Außenschulter 134 verbunden wird, und wenn ein radial innerster Auflagepunkt des Elastomerrings 190 an der ersten Innenschulter 172 mit einem radial äußersten Auflagepunkt des Elastomerrings 190 an der zweiten Außenschulter 134 verbunden wird, so ergeben sich die zwei eingezeichneten gestrichelten Linien, wobei eine Winkelhalbierende durch deren Schnittpunkt, die zwischen der ersten Innenschulter 172 und der zweiten Außenschulter verläuft, eine erste Verbindungslinie VL1 zwischen Mittelpunkte der Auflageflächen 172A, 134A des Elastomerrings 190 an der ersten Innenschulter und der 172 bzw. der zweiten Außenschulter 134, definiert.

Wenn dem entsprechend in dem Längsschnitt gemäß Fig. 2, ein radial äußersten Auflagepunkt des Elastomerrings 190 an der zweiten Innenschulter 174 mit einem radial innersten Auflagepunkt des Elastomerrings 190 an der ersten Außenschulter 132 verbunden wird, und wenn ein radial innerster Auflagepunkt des Elastomerrings 190 an der zweiten Innenschulter 174 mit einem radial äußersten Auflagepunkt des Elastomerrings 190 an der ersten Außenschulter 132 verbunden wird, so ergeben sich die zwei eingezeichneten durchgezogenen Linien, wobei eine Winkelhalbierende durch deren Schnittpunkt, die zwischen der zweiten Innenschulter 174 und der ersten Außenschulter verläuft, eine zweite Verbindungslinie VL2 zwischen Mittelpunkte der Auflageflächen 174A, 132A des Elastomerrings 190 an der zweiten Innenschulter und der 174 bzw. der zweiten Außenschulter 132, definiert.

Diese beiden Verbindungslinien VL1, VL2, verlaufen für eine Radialdichtung vergleichsweise steil. So ist die erste Verbindungslinie etwa um 35° gegenüber der Rotationsachse Z geneigt, und die zweite Verbindungslinie ist um etwa 29° gegenüber der Rotationsachse geneigt. Damit beträgt die Axialkomponente der Verbindunglinien jeweils mehr sind mehr als 80% ihrer Länge. Die Länge der Axialkomponenten ist ein Indikator für die Wirksamkeit des Elastomerrings 190 einer axialen Verschiebung der Kreisscheibe 160 entgegenzuwirken. Ein Wert von 80% ist sehr gut.

Zur Montage der Baugruppe 100 wird ein Elastomerring 190 über die Mantelfläche 166 der Kreisscheibe 160 gespannt, so dass der Elastomerring an den beiden Innenschultern 172, 174 anliegt. Dann wird die Kreisscheibe mit der Strinfläche 162 voran, von der zweiten Stirnfläche 114 des Ringkörpers her in die Scheibenaufnahme 120 geschoben. Dabei gleitet der Elastomerring 190 an der Führungsfläche 124 entlang und wird durch Letztere radial einwärts in den Ausweichraum 176 der Innenringnut 170 gepresst, wodurch der Elastomerring 190 zwischen den Innenschultern in axialer Richtung gestaucht wird, was zu beachtlichen Axialspannungen führt. Sobald der maximale Umfang des Elastomerrings 190 das Ende der Führungsfläche passiert hat, beginnt der Elastomerring 190 die Axialspannungen abzubauen, indem er in das nun verfügbare freie Volumen der Außenringnut 130 expandiert, so dass der Elastomerring seine finale Position erreicht, die gegebenenfalls durch moderate axiale Relativebewegungen zwischen Ringkörper 110 und Kreisscheibe 160 optimiert werden kann.

## Patentansprüche

1. Baugruppe(100), umfassend:
eine Kreisscheibe (160);
einen Ringkörper(110); und
einen Elastomerring (190);
wobei der Ringkörper (110) eine Scheibenaufnahme (120) aufweist, die durch eine umlaufende Mantelfläche umschlossen ist, wobei die Mantelfläche eine ringförmig umlaufende Außennut (130) aufweist, welche in einer ersten axialen Richtung durch eine erste Außenschulter (132) begrenzt ist, und welche in einer entgegengesetzten, zweiten axialen Richtung durch eine zweite axiale Außenschulter (134) begrenzt ist;
wobei an die erste Außenschulter (132) in der ersten axialen Richtung eine Führungsfläche (124) anschließt, deren Radius mit Abstand zur ersten Schulter monoton steigt, wobei gilt dr/dz <2/3 und insbesondere dr/dz < 1/3, wobei r der Radius und z die axiale Koordinate der Führungsfläche (124) in Zylinderkoordinaten sind;
wobei die Kreisscheibe (160) eine äußeren Mantelfläche mit einer umlaufenden Innennut (170) aufweist, die sich radial einwärts erstreckt, die in der ersten axialen Richtung durch eine erste Innenschulter (172) begrenzt ist, und die in der zweiten axialen Richtung durch eine zweite Innenschulter (174) begrenzt ist;
wobei zumindest die beiden Innenschultern (172, 174) in einem axialen Längsschnitt, in dem die Rotationsachse der Kreisscheibe (160) verläuft, eine konvexe Kontur aufweisen,
wobei der Elastomerring (190) zwischen beiden Innenschultern (172, 174) und beiden Außenschultern (132, 134) eingespannt ist, wodurch insbesondere eine Verschiebung der Kreisscheibe (160) aus dem Ringkörper (110) bis zu einer Grenzbelastung verhindert wird,
wobei der Elastomerring (190) als Dichtring wirkt.

2. Baugruppe (100) nach Anspruch 1, wobei die zweite Innenschulter (174) und die zweite Außenschulter (134) als Dichtflächen dienen.

3. Baugruppe (100) nach Anspruch 1 oder 2, wobei die Innennut einen durch den Elastomerring (190) begrenzten, leeren Ausweichraum (176) aufweist, dessen Querschnittsfläche im Längsschnitt nicht weniger als ein Viertel Querschnittsfläche, beispielsweise nicht weniger ein Drittel einer Querschnittsfläche des Elastomerrings (190) im entspannten, nicht eingespannten Zustand beträgt, wobei eine lichte axiale Höhe h des Ausweichraums geringer ist als die Schnurstärke des Elastomerrings (190).

4. Baugruppe (100) nach einem der vorhergehenden Ansprüche, wobei eine lichte Höhe h zwischen den Innenschultern (172, 174) mit dem Radius monoton steigt, wobei für die Steigung dh/dr der lichten axialen Höhe h als Funktion des Radius r zwischen der ersten Innenschulter (172) und der zweiten Innenschulter (174), auf mindestens den radial äußeren 50% der Flächen der Innenschultern (172, 174), zwischen denen der Elastomerring (190) axial eingespannt ist, gilt: dh/dr > 1/2, insbesondere dh/dr > 2/3.

5. Baugruppe (100) nach einem der vorhergehenden Ansprüche, wobei die Führungsfläche (124) einen kegelstumpfförmigen Verlauf aufweist.

6. Baugruppe (100) nach einem der vorhergehenden Ansprüche, wobei die Kreisscheibe (160) einen transparenten Werkstoff aufweist, insbesondere Glas oder ein Transparentes Polymer, beispielsweise PMMA, PEEK oder Polycarbonat.

7. Baugruppe (100) nach einem der vorhergehenden Ansprüche, wobei der Ringkörper (110) einen metallischen Werkstoff aufweist, beispielsweise Aluminium, oder ein Polymer, beispielsweise PEEK oder Polycarbonat.

8. Baugruppe (100) nach einem der vorhergehenden Ansprüche, wobei der Elastomerring (190) ein Elastomer aufweist, insbesondere VMQ, HNBR, FKM, EPDM.

9. Baugruppe (100) nach einem der vorhergehenden Ansprüche,
wobei der maximale radiale Abstand zwischen der Mantelfläche der Kreisscheibe (160) und der Mantelfläche der Scheibenaufnahme, insbesondere auf einer axialen Länge von nicht weniger als 10 mm, nicht mehr als 0,15 mm beträgt.

10. Baugruppe (100) nach einem der vorhergehenden Ansprüche, wobei in einem axialen Längsschnitt durch das Zentrum der Kreisscheibe (160) eine erste Verbindungslinie (VL1) einen ersten Mittelpunkt einer ersten Auflagefläche des Elastomerrings (190) an der ersten Innenschulter (172) und einen zweiten Mittelpunkt einer zweiten Auflagefläche des Elastomerrings (190) der zweiten Außenschulter (134) miteinander verbindet, wobei eine zweite Verbindungslinie (VL2) einen dritten Mittelpunkt einer dritten Auflagefläche des Elastomerrings (190) an der zweiten Innenschulter (174) und einen vierten Mittelpunkt einer vierten Auflagefläche des Elastomerrings (190) der ersten Außenschulter (132) miteinander verbindet,
wobei die erste Verbindungslinie gegenüber der Rotationsachse der Kreisscheibe (160) um nicht mehr als 45°, insbesondere um nicht mehr als 40° geneigt ist, wobei die zweite Verbindungslinie gegenüber der Rotationsachse der Kreisscheibe (160) um nicht mehr als 45°, insbesondere um nicht mehr als 40° geneigt ist,
wobei die erste Verbindungslinie gegenüber der Rotationsachse der Kreisscheibe (160) um nicht weniger als 15°, insbesondere um nicht weniger als 23° geneigt ist, wobei die zweite Verbindungslinie gegenüber der Rotationsachse der Kreisscheibe (160) um nicht weniger als 15°, insbesondere um nicht weniger als 23° geneigt ist.

11. Baugruppe (100) nach einem der vorhergehenden Ansprüche, wobei ein minimaler Abstand zwischen der ersten Innenschulter (172) und der zweiten Außenschulter (134) nicht mehr als 90% der Schnurstärke des Elastomerrings (190) beträgt, und wobei ein minimaler Abstand zwischen der zweiten Innenschulter (174) und der ersten Außenschulter (132) nicht mehr als 90% der Schnurstärke des Elastomerrings (190) beträgt.

12. Baugruppe (100) nach einem der vorhergehenden Ansprüche, wobei ein minimaler Radius der ersten Außenschulter (132) um nicht mehr als 0,5 mm, insbesondere nicht mehr als 0,2 mm größer ist als ein maximaler Radius der zweiten Innenschulter (174).

13. Baugruppe (100) nach einem der vorhergehenden Ansprüche, wobei die Grenzbelastung eine Belastung umfasst, bei welcher der Elastomerring (190) reißt, oder ein Schlag mit einer Energie von mehr als 7 Joule, oder ein an der Kreisscheibe (160) von mehr als 0,2 bar, beispielsweise mehr als 0,5 bar, insbesondere mehr als 1 bar.

14. Feldgerät (300), umfassend ein Gehäuse (310) und eine Betriebsschaltung (330), welche in dem Gehäuse (310) angeordnet ist, wobei das Gehäuse (310) einen Gehäusekörper (312) und mindestens einen Gehäusedeckel aufweist,
wobei der Gehäusedeckel eine Baugruppe (100) nach einem der vorhergehenden Ansprüche umfasst, wobei der Ringkörper (110) weiterhin einen zylindrischen Wandabschnitt (116) und ein Gewinde (118) aufweist.
wobei das Gewinde (118) des Gehäusedeckels mit einem komplementären Gewinde (316) des Gehäusekörpers (312) verschraubt ist, um die Betriebsschaltung zu umschließen.

## Claims

1. An assembly (100), comprising:
one circular disk (160);
one ring assembly (110); and
one elastomer ring (190);
wherein the ring assembly (110) exhibits a disk holder (120) that is enclosed by a circumferential shell surface, wherein the shell surface exhibits a ring-shaped circumferential external groove (130) that is limited in a first axial direction by a first outer shoulder (132) and limited in an opposite, second axial direction by a second axial outer shoulder (134);
wherein a guide surface (124) connects to the first outer shoulder (132) in the first axial direction and the radius of this guide surface increases as it gets further away from the first shoulder, wherein dr/dz <2/3 and in particular dr/dz < 1/3 applies,
wherein r represents the radius and z represents the axial coordinate of the guide surface (124) in cylindrical coordinates;
wherein the circular disk (160) exhibits an outer shell surface area with a circumferential internal groove (170) that extends radially inwards and that is limited in the first axial direction by a first inner shoulder (172) and limited in the second axial direction by a second inner shoulder (174);
wherein at least the two inner shoulders (172, 174) exhibit a convex contour in an axial longitudinal section, in which the rotary axis of the circular disk (160) runs,
wherein the elastomer ring (190) is clamped between the two inner shoulders (172, 174) and the two outer shoulders (132, 134), which in particular prevents any movement of the circular disk (160) out of the ring assembly (110) up to a load limit,
wherein the elastomer ring (190) acts as a sealing ring.

2. An assembly (100) according to claim 1, wherein the second inner shoulder (174) and the second outer shoulder (134) serve as sealing surfaces.

3. An assembly (100) according to claim 1 or 2, wherein the internal groove exhibits an empty expansion space (176) that is limited by the elastomer ring (190), wherein the cross-sectional area of the expansion space in the longitudinal section is no less than one quarter of the cross-sectional area, for example no less than one third of the cross-sectional area, of the elastomer ring (190) when in a relaxed, non-clamped state, wherein a clear axial height of the expansion space is less than the thickness of the elastomer ring (190).

4. An assembly (100) according to one of the preceding claims, wherein a clearance height h between the inner shoulders (172, 174) increases monotonously with the radius,
wherein the following ratio applies to the pitch dh/dr of the clear axial height h as a function of the radius r between the first inner shoulder (172) and the second inner shoulder (174), on at least the radial outer 50% of the surfaces of the inner shoulders (172, 174), between which the elastomer ring (190) is axially clamped: dh/dr > 1/2, in particular dh/dr > 2/3.

5. An assembly (100) according to one of the preceding claims, wherein the guide surface (124) exhibits a truncated cone shape.

6. An assembly (100) according to one of the preceding claims, wherein the circular disk (160) exhibits a transparent material, in particular glass or a transparent polymer, for example, PMMA, PEEK or polycarbonate.

7. An assembly (100) according to one of the preceding claims, wherein the ring assembly (110) exhibits a metallic material, for example aluminum, or a polymer, for example PEEK or polycarbonate.

8. An assembly (100) according to one of the preceding claims, wherein the elastomer ring (190) exhibits an elastomer, in particular VMQ, HNBR, FKM, EPDM.

9. An assembly (100) according to one of the preceding claims,
wherein the maximum radial distance between the outer surface of the circular disk (160) and the shell surface of the disk holder, in particular over an axial length of no less than 10 mm, is no more than 0.15 mm.

10. An assembly (100) according to one of the preceding claims, wherein in an axial longitudinal section through the center of the circular disk (160) a first connecting line (VL1) connects a first center point of a first contact area of the elastomer ring (190) to the first inner shoulder (172) and a second center point of a second contact area of the elastomer ring (190) to the second outer shoulder (134), wherein a second connecting line (VL2) connects a third center point of a third contact area of the elastomer ring (190) to the second inner shoulder (174) and a fourth center point of a fourth contact area of the elastomer ring (190) to the first outer shoulder (132),
wherein the first connecting line is inclined relative to the rotary axis of the circular disk (160) at an angle of no more than 45°, in particular no more than 40°,
wherein the second connecting line is inclined relative to the rotary axis of the circular disk (160) at an angle of no more than 45°, in particular no more than 40°,
wherein the first connecting line is inclined relative to the rotary axis of the circular disk (160) at an angle of no more than 15°, in particular no more than 23°,
wherein the second connecting line is inclined relative to the rotary axis of the circular disk (160) at an angle of no more than 15°, in particular no more than 23°.

11. An assembly (100) according to one of the preceding claims, wherein a minimum distance between the first inner shoulder (172) and the second outer shoulder (134) is no more than 90% of the thickness of the elastomer ring (190), and wherein a minimum distance between the second inner shoulder (174) and the first outer shoulder (132) is no more than 90% of the thickness of the elastomer ring (190).

12. An assembly (100) according to one of the preceding claims, wherein a minimum radius of the first outer shoulder (132) is no more than 0.5 mm greater, in particular no more than 0.2 mm greater, than a maximum radius of the second inner shoulder (174).

13. An assembly (100) according to one of the preceding claims, wherein the load limit encompasses a load at which the elastomer ring (190) breaks, or an impact on the circular disk (160) with energy in excess of 7 joules or 0.2 bar, for example in excess of 0.5 bar, in particular in excess of 1 bar.

14. A field device (300), comprising a housing (310) and an operating circuit (330) that is arranged in said housing (310), wherein the housing (310) exhibits a housing body (312) and at least one housing cover,
wherein the housing cover exhibits an assembly (100) according to one of the preceding claims, wherein the ring assembly (110) also exhibits a cylindrical wall section (116) and a thread (118).
wherein the thread (118) on the housing cover is screwed into a complementary thread (316) on the housing body (312) in order to encase the operating circuit.

## Revendications

1. Sous-ensemble (100), comprenant :
un disque circulaire (160) ;
un corps annulaire (110) ; et
une bague en élastomère (190) ;
le corps annulaire (110) présentant un logement de disque (120), lequel logement est entouré par une surface d'enveloppe périphérique, la surface d'enveloppe présentant une rainure extérieure (130) périphérique annulaire, laquelle rainure est limitée dans une première direction axiale par un premier épaulement extérieur (132), et laquelle rainure est limitée dans une deuxième direction axiale opposée par un deuxième épaulement extérieur axial (134) ;
une surface de guidage (124) se raccordant au premier épaulement extérieur (132) dans la première direction axiale, surface dont le rayon augmente de manière monotone à distance du premier épaulement, la relation dr/dz < 2/3 et notamment la relation dr/dz < 1/3 étant valable, où r est le rayon et z la coordonnée axiale de la surface de guidage (124) en coordonnées cylindriques ;
le disque circulaire (160) présentant une surface d'enveloppe extérieure avec une rainure intérieure (170) périphérique, laquelle rainure s'étend radialement vers l'intérieur et laquelle rainure est limitée dans la première direction axiale par un premier épaulement intérieur (172), et laquelle rainure est limitée dans la deuxième direction axiale par un deuxième épaulement intérieur (174) ;
au moins les deux épaulements intérieurs (172, 174) présentant un contour convexe dans une coupe longitudinale axiale dans laquelle s'étend l'axe de rotation du disque circulaire (160),
la bague en élastomère (190) étant serrée entre les deux épaulements intérieurs (172, 174) et les deux épaulements extérieurs (132, 134), ce qui empêche notamment un déplacement du disque circulaire (160) hors du corps annulaire (110) jusqu'à une charge limite,
la bague en élastomère (190) faisant office de bague d'étanchéité.

2. Sous-ensemble (100) selon la revendication 1, pour lequel le deuxième épaulement intérieur (174) et le deuxième épaulement extérieur (134) servent de surfaces d'étanchéité.

3. Sous-ensemble (100) selon la revendication 1 ou 2, pour lequel la rainure intérieure comprend un espace d'évitement vide (176) délimité par la bague en élastomère (190), espace dont la surface de section transversale en coupe longitudinale n'est pas inférieure à un quart de la surface de section transversale, par exemple pas inférieure à un tiers d'une surface de section transversale de la bague en élastomère (190) à l'état détendu, non serré, une hauteur axiale libre h de l'espace d'évitement étant inférieure à l'épaisseur du cordon de la bague en élastomère (190).

4. Sous-ensemble (100) selon l'une des revendications précédentes, pour lequel une hauteur libre h entre les épaulements internes (172, 174) augmente de manière monotone avec le rayon,
la pente dh/dr de la hauteur axiale libre h en fonction du rayon r entre le premier épaulement interne (172) et le deuxième épaulement interne (174), sur au moins les 50 % radialement extérieurs des surfaces des épaulements internes (172, 174) entre lesquels la bague en élastomère (190) est serrée axialement, étant telle que : dh/dr > 1/2, notamment dh/dr > 2/3.

5. Sous-ensemble (100) selon l'une des revendications précédentes, pour lequel la surface de guidage (124) présente une allure tronconique.

6. Sous-ensemble (100) selon l'une des revendications précédentes, pour lequel le disque circulaire (160) comprend un matériau transparent, notamment du verre ou un polymère transparent, par exemple du PMMA, du PEEK ou du polycarbonate.

7. Sous-ensemble (100) selon l'une des revendications précédentes, pour lequel le corps annulaire (110) comprend un matériau métallique, par exemple de l'aluminium, ou un polymère, par exemple du PEEK ou du polycarbonate.

8. Sous-ensemble (100) selon l'une des revendications précédentes, pour lequel la bague en élastomère (190) comprend un élastomère, notamment du VMQ, du HNBR, du FKM, de l'EPDM.

9. Sous-ensemble (100) selon l'une des revendications précédentes, pour lequel la distance radiale maximale entre la surface d'enveloppe du disque circulaire (160) et la surface d'enveloppe du logement de disque, notamment sur une longueur axiale qui n'est pas inférieure à 10 mm, n'est pas supérieure à 0,15 mm.

10. Sous-ensemble (100) selon l'une des revendications précédentes, pour lequel, dans une coupe longitudinale axiale passant par le centre du disque circulaire (160), une première ligne de liaison (VL1) relie un premier centre d'une première surface d'appui de la bague en élastomère (190) sur le premier épaulement interne (172) et un deuxième centre d'une deuxième surface d'appui de la bague en élastomère (190) du deuxième épaulement externe (134), une deuxième ligne de liaison (VL2) reliant entre eux un troisième centre d'une troisième surface d'appui de la bague en élastomère (190) sur le deuxième épaulement intérieur (174) et un quatrième centre d'une quatrième surface d'appui de la bague en élastomère (190) du premier épaulement extérieur (132),
la première ligne de liaison étant inclinée par rapport à l'axe de rotation du disque circulaire (160) de pas plus de 45°, notamment de pas plus de 40°, la deuxième ligne de liaison étant inclinée par rapport à l'axe de rotation du disque circulaire (160) de pas plus de 45°, notamment de pas plus de 40°,
la première ligne de liaison étant inclinée par rapport à l'axe de rotation du disque circulaire (160) de pas moins de 15°, notamment de pas moins de 23°, la deuxième ligne de liaison étant inclinée par rapport à l'axe de rotation du disque circulaire (160) de pas moins de 15°, notamment de pas moins de 23°.

11. Sous-ensemble (100) selon l'une des revendications précédentes,
pour lequel une distance minimale entre le premier épaulement intérieur (172) et le deuxième épaulement extérieur (134) n'est pas supérieure à 90 % de l'épaisseur du cordon de la bague en élastomère (190), et
pour lequel une distance minimale entre le deuxième épaulement intérieur (174) et le premier épaulement extérieur (132) n'est pas supérieure à 90 % de l'épaisseur du cordon de la bague en élastomère (190).

12. Sous-ensemble (100) selon l'une des revendications précédentes, pour lequel un rayon minimal du premier épaulement extérieur (132) n'est pas supérieur à un rayon maximal du deuxième épaulement intérieur (174) de plus de 0,5 mm, notamment de plus de 0,2 mm.

13. Sous-ensemble (100) selon l'une des revendications précédentes, pour lequel la charge limite comprend une charge pour laquelle la bague en élastomère (190) se rompt, ou un choc avec une énergie supérieure à 7 joules, ou une pression sur le disque circulaire (160) supérieure à 0,2 bar, par exemple supérieure à 0,5 bar, notamment supérieure à 1 bar.

14. Appareil de terrain (300), comprenant un boîtier (310) et un circuit d'exploitation (330), lequel circuit est disposé dans le boîtier (310), le boîtier (310) comprenant un corps de boîtier (312) et au moins un couvercle de boîtier,
le couvercle de boîtier comprenant un sous-ensemble (100) selon l'une des revendications précédentes, le corps annulaire (110) comprenant en outre une partie de paroi cylindrique (116) et un filetage (118),
le filetage (118) du couvercle de boîtier étant vissé à un filetage complémentaire (316) du corps de boîtier (312) afin d'entourer le circuit d'exploitation.
